# EUROPÄISCHE PATENTSCHRIFT

(11) **EP 0 745 260 B1**
(45) Veröffentlichungstag und Bekanntmachung des Hinweises auf die Patenterteilung: **12.08.1998**
(21) Anmeldenummer: 95906896.6
(22) Anmeldetag: 24.01.1995
(51) Int. Cl.: H01H 1/42, H02B 11/04

(54) **TRENNKONTAKTBLOCK MIT RELATIV ZUEINANDER BEWEGBAR ANGEORDNETEN BRÜCKENARTIGEN KONTAKTSTÜCKEN**
BREAK CONTACT BLOCK WITH RELATIVELY MOVABLE BRIDGE-LIKE CONTACTS
CONTACT DE RUPTURE AVEC DES PIECES DE CONTACT EN PONT MOBILES LES UNES PAR RAPPORT AUX AUTRES

(30) Priorität: 18.02.1994 DE 4405900
(43) Veröffentlichungstag der Anmeldung: 04.12.1996
(73) Patentinhaber: SIEMENS AKTIENGESELLSCHAFT, 80333 München (DE)
(72) Erfinder: DEYLITZ, Erhard, D-10405 Berlin (DE)
(86) Internationale Anmeldenummer: DE9500125
(87) Internationale Veröffentlichungsnummer: WO9522830

(56) Entgegenhaltungen:
- EP-A- 0 107 611
- DE-A- 2 851 738
- DE-B- 1 092 988

## Beschreibung

Die Erfindung betrifft einen Trennkontaktblock zur Verbindung bzw. Trennung relativ zueinander bewegbarer Stromschienen, bestehend aus einem Gehäuse und in dem Gehäuse parallel zueinander und relativ zueinander bewegbar angeordneten brückenartigen Kontaktstücken, die an ihren Enden Kontaktflächen zur Anlage an den zu verbindenden Stromschienen besitzen und die durch Federn gegen die Stromschienen vorgespannt sind, wobei jeweils zwei Kontaktstücke zur Bildung paralleler Strombahnen einander gegenüberstehend angeordnet sind. Eingesetzt werden solche Trennkontaktblöcke beispielsweise in elektrischen Schaltanlagen mit ausfahrbar angeordneten Leistungsschaltern.

Ein Trennkontaktblock dieser Art ist durch die EP-B-0 107 611 bekannt geworden. Das Gehäuse dieses Trennkontaktblockes besteht aus Blechteilen, die miteinander vernietet bzw. verstemmt sind. Der gegenseitige Abstand der Kontaktstücke wird durch Abstandsglieder mit zwischen die Kontaktstücke greifenden Armen aufrechterhalten. Je nach Dicke der zu verbindenden Stromschienen werden daher Trennkontaktblöcke mit unterschiedlichen Gehäusen benötigt. Die Kontaktstücke und Abstandsglieder sind dagegen unverändert verwendbar.

Der Erfindung liegt die Aufgabe zugrunde, die Typenvielfalt benötigter Trennkontaktblöcke zu verringern.

Gemäß der Erfindung wird diese Aufgabe dadurch gelöst, daß das Gehäuse aus zwei Gehäusehälften besteht, die zur gegenseitigen Anlage bestimmte, mit Durchgangsöffnungen für Verbindungselemente versehene Fußteile besitzen und daß die Gehäusehälften zur Unterteilung des zur Aufnahme der Kontaktstücke vorgesehenen Raumes mit Zwischenwänden versehen sind. Die Unterteilung des Gehäuses des Trennkontaktblockes in Gehäusehälften ermöglicht es, Trennkontaktblöcke für unterschiedlich dicke Stromschienen dadurch zu fertigen, daß die Gehäusehälften im jeweils benötigten Abstand montiert werden. Auch erlauben es die Zwischenwände, je nach Bedarf eine geringere oder größere Anzahl von Kontaktstücken oder solche von geringerer oder größerer Dicke zu verwenden.

Im Rahmen der Erfindung besteht eine besonders vorteilhafte Möglichkeit zur Montage der Gehäusehälften in zwei festgelegten unterschiedlichen Abständen darin, daß die Fußteile eine Grundfläche und wenigstens einen von der Grundfläche abragenden Vorsprung mit einer Stirnfläche aufweisen, wobei die Vorsprünge derart gegeneinander versetzt angeordnet sind, daß bei dem Zusammenfügen zweier Gehäusehälften in der einen Stellung jeweils der wenigstens eine Vorsprung des einen Fußteiles mit seiner Stirnfläche an der Grundfläche des gegenüberliegenden Fußteiles anliegt und hierdurch ein relativ geringer Abstand der beiden Gehäusehälften bestimmt ist, während beim Zusammenfügen zweier Gehäusehälften in einer um 180° gedrehten Stellung die Vorsprünge einander gegenüber-stehender Fußteile mit ihren Stirnflächen aufeinanderliegen und hierdurch ein relativ großer Abstand der beiden Gehäusehälften bestimmt ist.

Durch eine Weiterbildung der erwähnten Gestaltung der Fußteile kann dafür gesorgt werden, daß die beiden Gehäusehälften trotz verhältnismäßig geringer Gesamtfläche der Fußteile verkantungsfrei gegeneinander ausgerichtet werden, wenn die Verbindungselemente eingesetzt sind. Dies kann dadurch geschehen, daß die Vorsprünge und Ausnehmungen in jedem Fußteil symmetrisch zu der Durchgangsöffnung für das zugehörige Befestigungsmittel angeordnet sind. Insbesondere empfiehlt sich in diesem Zusammenhang eine Gestaltung, bei der jedes der beiden Fußteile vier Vorsprünge mit im wesentlichen gleichem Gesamtquerschnitt aufweist, die zur Herbeiführung des relativ geringen Abstandes der Gehäusehälften aufgrund ihrer versetzten Anordnung zu einer geschlossenen Kontur zusammenfügbar sind. Hierdurch wird erreicht, daß eine stabile, zugleich aber raumsparende Verbindung der beiden Gehäusehälften zustandekommt, die einen nur geringen Abstand der zu verbindenden Stromschienen und somit verhältnismäßig kurze Kontaktstücke ermöglicht.

Jede der Gehäusehälften des Trennkontaktblockes kann zwei konsolenartig geformte und mit Rippen versehene Fußteile besitzen. In diesem Zusammenhang ist es vorteilhaft, die Rippen so zu gestalten, daß sie Stützflächen zur Anlage eines Widerlagers bilden. Auf die Bedeutung einer solchen Anordnung wird noch eingegangen.

Bei dem eingangs erwähnten bekannten Trennkontaktblock stützen sich die den Kontaktstücken zugeordneten Federn an einer Rippe eines der Teile ab, aus denen das Gehäuse des Trennkontaktblockes zusammengesetzt ist. Die Federn sind dabei als federnde Arme eines einheitlichen Teiles ausgebildet. Nach einer Weiterbildung der Erfindung erweist es sich demgegenüber als vorteilhaft, daß jedem Kontaktstück eine Feder zugeordnet und diese als Drahtbiegefeder ausgebildet ist, deren umgebogene Schenkelenden an einem Steg anliegen, der an jeder der Gehäusehälften quer zu den Zwischenwänden verlaufend angeordnet ist. Dies hat den Vorteil, daß nur eine Bauform einer Feder benötigt wird, wenn Trennkontaktblöcke mit einer unterschiedlichen Anzahl von Kontaktstücken hergestellt werden sollen.

Der erwähnte Steg kann zur Zentrierung der als Drahtbiegefeder ausgebildeten Feder eine die Schenkelenden trennende Rippe besitzen. Hierdurch wird die Feder in den durch die Zwischenwände gebildeten Kammern der Gehäusehälften zentriert und hierdurch eine gleichmäßige Kontaktkraft der benachbarten Kontaktstücke sichergestellt.

Um einen gewissen Fluchtungsausgleich der zu verbindenden Stromschienen zu ermöglichen, empfiehlt es sich, daß die Kontaktstücke zur etwa mittigen Abstützung an den Federn eine nach außen gewölbte Rückenfläche besitzen.

Eine gewünschte Einstecktiefe der Stromschienen in einem Trennkontaktblock kann dadurch erreicht werden, daß die Zwischenwände der Gehäusehälften fluchtende Ausnehmungen zur Aufnahme eines Abstandsstückes besitzen, das einen gerundeten Fortsatz zur Anlage an der Stirnfläche einer der Stromschienen aufweist und das die Kontaktstücke in einem zum Einführen der Stromschienen (8, 9) geeigneten Abstand hält. Der Fortsatz ermöglicht eine gewisse Schwenkbarkeit des Trennkontaktblockes zum Ausgleich von Fluchtungsfehlern.

Wie bereits erwähnt, sind Schaltanlagen mit verfahrbar angeordneten Leistungsschaltern ein bevorzugtes Anwendungsgebiet von Trennkontaktblöcken der vorliegenden Art. Hierbei werden die Trennkontaktblöcke wahlweise an dem Leistungschalter, d.h. beweglich, oder ortsfest, d.h. am Gerüst der Schaltanlage angeordnet und stehen daher auf einer Seite stets mit Stromschienen in Verbindung. Durch die schon erwähnten Stützflächen, die durch eine entsprechende Gestaltung der Rippen der Fußteile gebildet werden, ist der Trennkontaktblock für die geschilderte Anwendung besonders geeignet. Hierzu können die mit den Stützflächen zusammenwirkenden Widerlager Bestandteil eines den Trennkontaktblock aufnehmenden Isolierstoff-gehäuses sein, in das eine Stromschiene hineinragt, die mittels das Isolierstoffgehäuse abschließender Halteorgane befestigt ist. Durch die Stützflächen wird der Trennkontaktblock in dem Isolierstoffgehäuse geführt und kann sich ohne nachteilige Auswirkung auf die Güte der Kontaktgabe an den Stromschienen auf eine zwischen diesen vorhandene Fluchtungsdifferenz einstellen.

Die Erfindung wird im folgenden anhand des in den Figuren dargestellten Ausführungsbeispieles näher erläutert.

Die Figur 1 zeigt einen Trennkontaktblock im Längsschnitt in der Längsrichtung der zu verbindenden Stromschienen.

Die Figur 2 zeigt den Trennkontaktblock gemäß der Figur 1 im Schnitt quer zu den zu verbindenden Stromschienen.

Die Figur 3 zeigt eine Draufsicht des Trennkontaktblockes gemäß den Figuren 1 und 2.

Die Figuren 4 und 5 entsprechen den Figuren 1 und 2, wobei jedoch den Trennkontaktblock bildende Gehäusehälften in größerem Abstand montiert sind als in den Figuren 1 und 2. Die Figur 6 zeigt ein Gehäuseteil eines Trennkontaktblockes in der Draufsicht auf Fußteile.

Die Figur 7 zeigt das Fußteil gemäß der Figur 6 in einer Seitenansicht.

Die Figuren 8 und 9 sind Stirnansichten der Gehäusehälfte gemäß den Figuren 6 und 7.

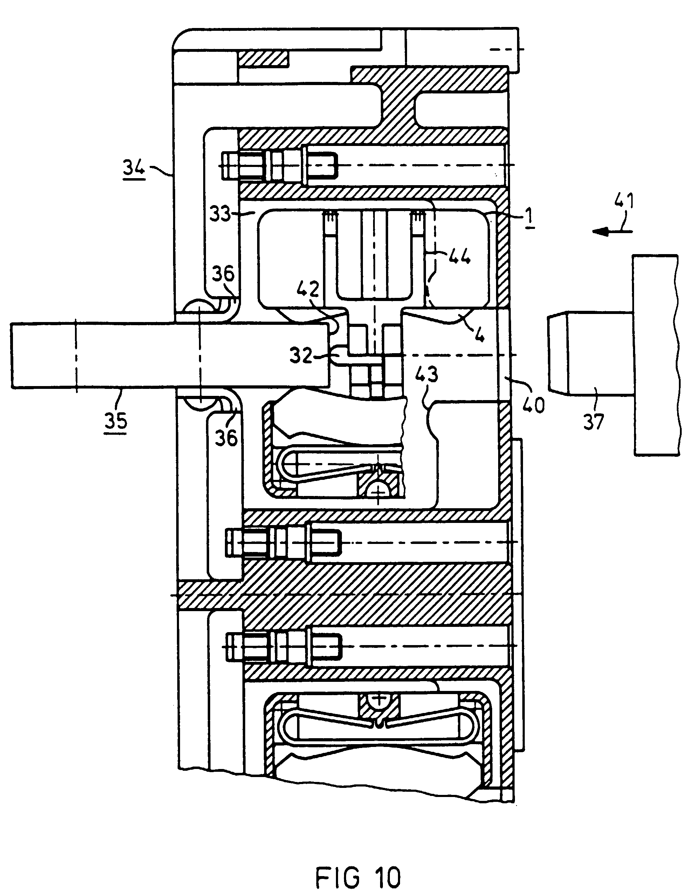

Ein Beispiel für die Anwendung eines Trennkontaktblockes nach der Erfindung ist in der Figur 10 dargestellt.

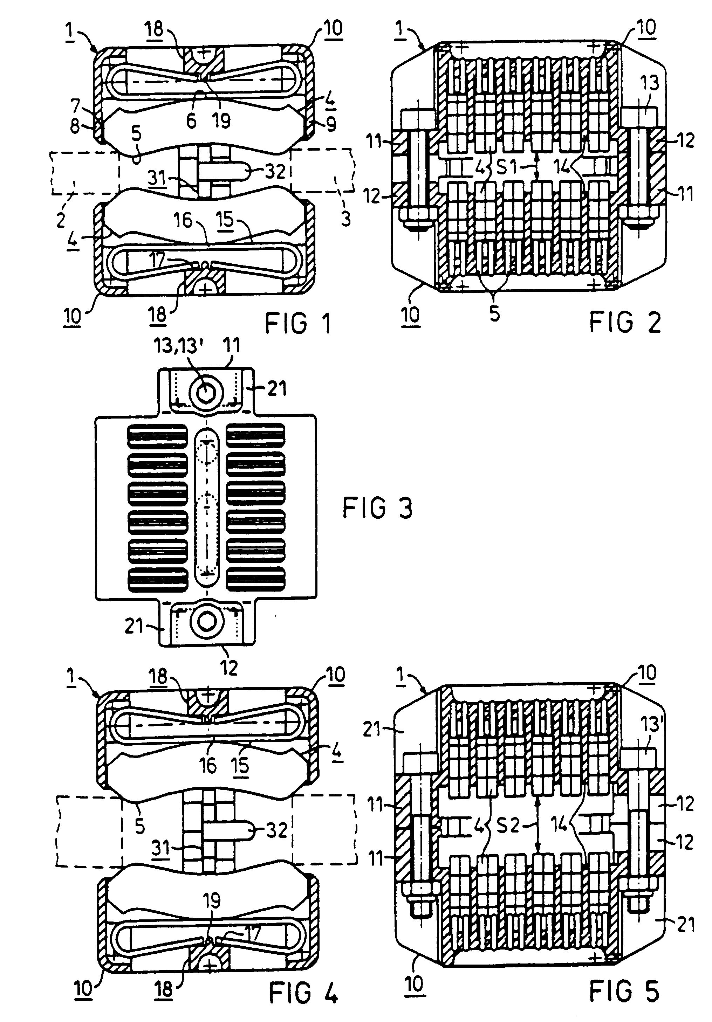

Der Trennkontaktblock 1 gemäß den Figuren 1 bis 5 dient zur Verbindung gestrichelt angedeuteter Stromschienen 2 und 3. Diese Stromschienen sind in Berührung, jedoch nicht in vollständigem Eingriff mit dem Trennkontaktblock 1 gezeigt. Zur Verbindung der Stromschienen 2 und 3 sind brückenartige Kontaktstücke 4 vorgesehen, die an ihren Enden je einen balligen Kontaktbereich 5 und eine nach außen gewölbte Rückenfläche 6 besitzen. Mit Stirnflächen 7 stützen sich die Kontaktstücke 4 an Wänden 8 und 9 je einer Gehäusehälfte 10 ab. Zwei gleiche Gehäusehälften 10 sind mittels stirnseitiger Fußteile 11 und 12 (Figur 2) und diese durchsetzender Verbindungselemente 13 bzw. 13'zusammengesetzt. Geeignet sind als Verbindungselemente z. B. Schrauben beliebiger Art und Niete.

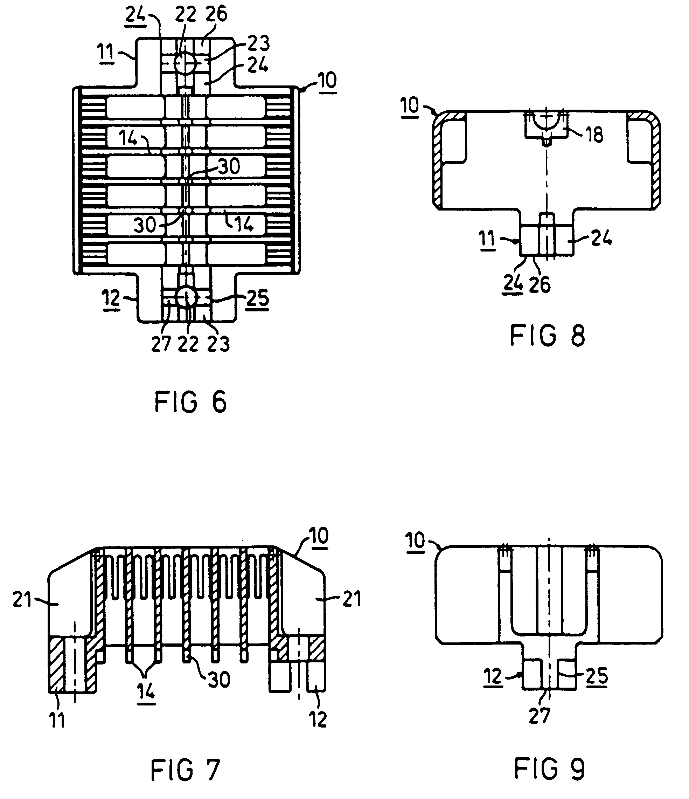

Wie näher den Figuren 3 und 5 zu entnehmen ist, ist jede der Gehäusehälften 10 mit Zwischenwänden 14 versehen, wodurch die Gehäusehälften in einzelne Kammern unterteilt werden, die je ein Kontaktstück 4 aufnehmen. Als Drahtbiegefedern ausgebildete Federn 15 liegen mit ihrem Mittelteil 16 an der gewölbten Rückenfläche 6 der Kontaktstücke 4 an und stützen sich mit ihren Schenkelenden 17 an einem quer zu den Zwischenwänden 14 verlaufenden Steg 18 der Gehäusehälften 10 ab. Eine Rippe 19 des Steges 18 ragt dabei zwischen die Schenkelenden 17 und zentriert hierdurch die Federn 15 gegenüber den Kontaktstücken 14. Wie näher der Figur 3 und 5 zu entnehmen ist, enthält jede der Kammern der Gehäusehälften 10 zwei Kontaktstücke 4 und zwei Federn 15.

Zur Verbindung von je zwei gleichen Gehäusehälften 10 dienen an jeder Gehäusehälfte stirnseitig einander gegenüberliegend angeordneten Fußteile 11 und 12, die konsolenartig von dem Gehäusekörper abragen und zur Versteifung mit Rippen 21 versehen sind. Bei einem Vergleich der Figuren 1 und 2 sowie der Figuren 4 und 5 ist festzustellen, daß je nach der Stellung, in welcher zwei Gehäusehälften 10 zusammengesetzt sind, zwischen den Kontaktstücken 4 ein kleinerer Abstand S1 (Trennkontaktblock 1, Figuren 1 und 2) oder ein größerer Abstand S2 (Trennkontaktblock 1', Figuren 4 und 5) entsteht. Dies beruht auf der Gestaltung der Fußteile 11 und 12, auf die im folgenden anhand der Figuren 6 bis 9 näher eingegangen wird.

Wie die Figur 6 zeigt, besitzt jedes der Fußteile 11 und 12 eine Durchgangsöffnung 22 zur Aufnahme der in den Figuren 2, 3 und 4 gezeigten, als Befestigungsmittel dienenden Verbindungselemente 13 bzw. 13'. Das Fußteil 11 weist ausgehend von einer Grundfläche 23 vier prismatisch geformte Vorsprünge 24 auf, die symmetrisch zu der Durchgangsöffnung 22 angeordnet sind. Das gegenüberliegende Fußteil 12 besitzt ebenfalls ausgehend von einer Grundfläche 23 vier Vorsprünge 25, die ebenfalls symmetrisch zu der Durchgangsöffnung 22 angeordnet sind. Jedoch sind die Vorsprünge 24 gegenüber den Vorsprüngen 25 soweit versetzt, daß gerade dort ein Vorsprung 25 steht, wo an dem anderen Fußteil ein Zwischenraum zwischen den Vorsprüngen 24 vorhanden ist. Die Größe der Vorsprünge und deren Abstände sind derart gewählt, daß ein Fußteil 12 auf ein Fußteil 11 aufgesetzt werden kann und hierbei die Vorsprünge 24 und 25 unter Bildung einer im wesentlichen geschlossenen, etwa quaderförmigen Kontur zusammenfügbar sind. Dies ergibt den geringeren Abstand S1 gemäß der Figur 2. Werden zwei Gehäusehälften 10 dagegen so zusammengesetzt, daß jeweils zwei gleiche Fußteile 11 bzw. 12 aufeinandertreffen, so stoßen die Vorsprünge 24 mit ihren Stirnflächen 26 und die Vorsprünge 25 mit ihren Stirnflächen 27 aufeinander. Es ergibt sich dann der größere Abstand S2 gemäß der Figur 5. In diesem Fall sind anstelle der Verbindungselemente 13 entsprechend längere Verbindungselemente 13' vorgesehen.

Der Unterschied zwischen den Abständen S1 und S2 ist dadurch zu beeinflussen, daß die Vorsprünge 24 und 25 in ihrer Länge entsprechend bemessen werden. Es ist auch möglich, einen dritten, zwischen den Abständen S1 und S2 liegenden Abstand zu erzielen, indem ein Füllstück bereitgestellt wird, das in die Zwischenräume zwischen den Vorsprüngen 26 einzulegen ist.

In dem beschriebenen Ausführungsbeispiel weisen die Gehäusehälften auf gegenüberliegenden Seiten je ein Fußteil auf. Damit wird erreicht, daß die Gehäusehälften zuverlässig verbunden werden und dennoch der Raum zwischen den Gehäusehälften nur wenig eingeengt ist. Es ist jedoch möglich, die Gehäusehälften mit einer größeren Anzahl von Fußteilen zu versehen, wenn aufgrund bestimmter Anforderungen an die Abmessungen, die Festigkeit oder ähnliche Gesichtspunkte weitere Verbindungsstellen erwünscht sein sollten.

Wie insbesondere den Figuren 6 und 7 zu entnehmen ist, weisen die Zwischenwände 14 miteinander fluchtende Ausnehmungen 30 auf, in die ein Abstandsstück 31 gemäß der Figur 1 eingelegt ist. Durch das Abstandsstück 31 werden die Kontaktstücke 4 in einem solchen Abstand gehalten, daß sich die Stromschienen 2, 3 einführen lassen. An seiner der Stromschiene 3 zugewandten Seite ist das Abstandsstück 31 mit einem abgerundeten Vorsprung 32 versehen, was eine Schwenkbewegung des Trennkontaktblockes 1 relativ zu der Stromschiene 8 ermöglicht, wenn diese zwischen den Kontaktstücken 4 aufgenommen ist.

Das Zusammenwirken des Abstandstückes 31 mit weiteren Merkmalen des Trennkontaktblockes 1 bzw. 1' wird im folgenden anhand der Figur 10 erläutert, die eine Anwendung bei einer Schaltanlage mit einem verfahrbar angeordneten Leistungsschalter veranschaulicht. Der zuvor erläuterte Trennkontaktblock 1 ist in einer Ausnehmung 33 eines Isolierstoffgehäuses 34 aufgenommen, der zur ortsfesten Anbringung in der Schaltanlage vorgesehen ist. Gezeigt ist in der Figur 10 ein Schnitt durch eine von insgesamt sechs Verbindungsstellen, die benötigt werden, wenn ein dreipoliger Leistungsschalter mit ortsfesten Stromschienen zu verbinden ist. Die zu dem Trennkontaktblock 1 gehörende feststehende Stromschiene 35 ist mittels zweier Befestigungswinkel 36 an dem Isolierstoffgehäuse 34 befestigt. Die Kontaktstücke 4 des Trennkontaktblockes 1 stehen mit dem Ende der Stromschiene 35 im Eingriff, während die gegenüberstehende Stromschiene 37 des nicht dargestellten Leistungsschalters im Abstand von einer Einführöffnung 40 des Isolierstoffgehäuses 34 dargestellt ist. Die Stromschiene 37 ist durch eine Bewegung in der Richtung des Pfeiles 41 in Eingriff mit den Kontaktstücken 4 zu bringen.

Wie die Figur 10 zeigt, stützt sich der Trennkontaktblock 1 mittels gerundeter Fortsätze 32 an einer Stirnfläche 42 der Stromschiene 35 ab. Ferner stehen ballige Widerlager 43 des Isolierstoffgehäuses 34 je einer Stützfläche 44 gegenüber, die durch die Rippen 21 der Gehäusehälften 10 (Figur 3, 5) gebildet sind. Diese Anordnung ermöglicht eine etwa parallele Gleitbewegung des Trennkontaktblockes 1 in der Ausnehmung 33 als Toleranzausgleich bei einem axialen Versatz der Stromschienen 35 und 37 gegeneinander. Der Trennkontaktblock 1 ist somit gewissermaßen schwimmend in der Ausnehmung 33 des Isolierstoffgehäuses 34 abgestützt. Damit ist ein guter Stromübergang zwischen den Stromschienen 35 und 37 mit entsprechend geringer Erwärmung der Kontaktstellen sichergestellt.

## Patentansprüche

1. Trennkontaktblock (1, 1') zur Verbindung bzw. Trennung relativ zueinander bewegbarer Stromschienen (8,9), bestehend aus einem Gehäuse und in dem Gehäuse parallel zueinander und relativ zueinander bewegbar angeordneten brückenartigen Kontaktstücken (4), die an ihren Enden Kontaktflächen (5) zur Anlage an den zu verbindenden Stromschienen (6, 9, 35, 57) besitzen und die durch Federn (15) gegen die Stromschienen (8, 9) vorgespannt sind, wobei jeweils zwei Kontaktstücke (4) zur Bildung paralleler Strombahnen einander gegenüberstehend angeordnet sind,
**dadurch gekennzeichnet**, daß das Gehäuse aus zwei Gehäusehälften (10) besteht, die zur gegenseitigen Anlage bestimmte, mit Durchgangsöffnungen (22) für Verbindungselemente (13, 13') versehene Fußteile (11, 12) besitzen und daß die Gehäusehälften (10) zur Unterteilung des zur Aufnahme der Kontaktstücke (4) vorgesehenen Raumes mit Zwischenwänden (14) versehen sind.

2. Trennkontaktblock nach Anspruch 1,
**dadurch gekennzeichnet**, daß die Fußteile (11, 12) eine Grundfläche (23) und wenigstens einen von der Grundfläche (23) abragenden Vorsprung (24, 25) mit einer Stirnfläche (26, 27) aufweisen, wobei die Vorsprünge (24, 25) derart gegeneinander versetzt angeordnet sind, daß bei dem Zusammenfügen zweier Gehäusehälften (10) in der einen Stellung jeweils der Vorsprung (24) des einen Fußteiles (11) mit seiner Stirnfläche (26) an der Grundfläche (23) des gegenüberliegenden Fußteiles (12) anliegt und hierdurch ein relativ geringer Abstand (S1) der beiden Gehäusehälften (10) bestimmt ist, während beim Zusammenfügen zweier Gehäusehälften (10) in einer um 180° gedrehten Stellung die Vorsprünge (24, 25) einander gegenüberstehender Fußteile (11, 12) mit ihren Stirnflächen (26, 27) aufeinanderliegen und hierdurch ein relativ großer Abstand (S2) der beiden Gehäusehälften (10) bestimmt ist.

3. Trennkontaktblock nach Anspruch 2,
**dadurch gekennzeichnet**, daß die Vorsprünge (24, 25) an jedem Fußteil (11, 12) symmetrisch zu der Durchgangsöffnung (22) für das zugehörige Verbindungselement (13, 13') angeordnet sind.

4. Trennkontaktblock nach Anspruch 3,
**dadurch gekennzeichnet**, daß jedes der beiden Fußteile (11, 12) vier Vorsprünge (24, 25) mit im wesentlichen gleichem Gesamtquerschnitt aufweist, die zur Herbeiführung des relativ geringen Abstandes (S1) der Gehäusehälften (10) aufgrund ihrer versetzten Anordnung zu einer geschlossenen Kontur zusammenfügbar sind.

5. Trennkontaktblock nach einem der vorangehenden Ansprüche,
**dadurch gekennzeichnet**, daß jede Gehäusehälfte (10) zwei konsolenartig geformte und mit Rippen (21) versehene Fußteile (11, 12) besitzt.

6. Trennkontaktblock nach Anspruch 5,
**dadurch gekennzeichnet**, daß die Rippen (21) je eine Stützfläche (44) zur Anlage eines Widerlagers (43) bilden.

7. Trennkontaktblock nach einem der vorangehenden Ansprüche,
**dadurch gekennzeichnet**, daß jedem Kontaktstück (4) eine Feder (15) zugeordnet und diese als Drahtbiegefeder ausgebildet ist, deren umgebogene Schenkelenden (17) an einem Steg (18) anliegen, der an jeder der Gehäusehälften (10) quer zu den Zwischenwänden (14) verlaufend angeordnet ist.

8. Trennkontaktblock nach Anspruch 6,
**dadurch gekennzeichnet**, daß der Steg (18) zur Zentrierung der als Drahtbiegefeder ausgebildeten Feder (15) eine die Schenkelenden (17) trennende Rippe (20) besitzt.

9. Trennkontaktblock nach einem der vorangehenden Ansprüche,
**dadurch gekennzeichnet**, daß die Kontaktstücke (4) zur etwa mittigen Abstützung an den Federn (15) eine nach außen gewölbte Rückenfläche (6) besitzen.

10. Trennkontaktblock nach einem der vorangehenden Ansprüche,
**dadurch gekennzeichnet**, daß die Zwischenwände (14) fluchtende Ausnehmungen (30) zur Aufnahme eines Abstandsstückes (31) besitzen, das einen gerundeten Fortsatz (32) zur Anlage an einer Stirnfläche (42) einer Stromschiene (8) aufweist und das die Kontaktstücke (4) in einem zum Einführen der Stromschienen (8, 9) geeigneten Abstand hält.

11. Trennkontaktblock nach Anspruch 6,
**dadurch gekennzeichnet**, daß das bzw. die Widerlager (43) Bestandteil eines den Trenn-kontaktblock (1, 1') aufnehmenden Isolierstoff-Gehäuses (34) ist bzw. sind, in das eine Stromschiene (8) hineinragt, die mittels das Isolierstoffgehäuse (34) abschließender Halteorgane (36) befestigt ist.

## Claims

1. Break contact block (1, 1') for connecting and disconnecting, respectively, conductor rails (8, 9) which are movable relative to each other, comprising a housing and bridge-like contact pieces (4), which are arranged in the housing in a manner such that they are in parallel with each other and movable relative to each other and have at their ends contact surfaces (5) for placing against the conductor rails (6, 9, 35, 57) to be connected and are prestressed against the conductor rails (8, 9) by springs (15), with in each case two contact pieces (4) being arranged facing each other in order to form parallel current-conducting paths, characterised in that the housing comprises two housing halves (10), which have foot portions (11, 12) which are intended for placing against each other and are provided with through-openings (22) for connecting elements (13, 13'), and in that the housing halves (10) are provided with partitions (14) for subdividing the space provided for receiving the contact pieces (4).

2. Break contact block according to claim 1, characterised in that the foot portions (11, 12) have a base surface (23) and at least one projection (24, 25) which projects from the base surface (23) and has an end face (26, 27), with the projections (24, 25) being arranged so as to be staggered with respect to each other in such a way that when two housing halves (10) are joined together in the one position, in each case the end face (26) of the projection (24) of the one foot portion (11) rests against the base surface (23) of the opposing foot portion (12) and as a result of this a relatively small distance (S1) between the two housing halves (10) is determined, while when two housing halves (10) are joined together in a position which is rotated about 180°, the end faces (26, 27) of the projections (24, 25) of opposing foot portions (11, 12) rest against each other and as a result of this a relatively large distance (S2) between the two housing halves (10) is determined.

3. Break contact block according to claim 2, characterised in that the projections (24, 25) on each foot portion (11, 12) are arranged symmetrically with respect to the through-opening (22) for the associated connecting element (13, 13').

4. Break contact block according to claim 3, characterised in that each of the two foot portions (11, 12) has four projections (24, 25) having substantially the same overall cross-section, which projections, in order to bring about the relatively small distance (S1) between the housing halves (10) on the basis of their staggered arrangement, can be joined together to form a closed contour.

5. Break contact block according to one of the preceding claims, characterised in that each housing half (10) has two foot portions (11, 12) which are shaped in a bracket-like manner and provided with ribs (21).

6. Break contact block according to claim 5, characterised in that the ribs (21) each form a supporting surface (44) on which to place an abutment (43).

7. Break contact block according to one of the preceding claims, characterised in that a spring (15) is allocated to each contact piece (4) and this spring is constructed as a wire torsion spring, the bent-round leg ends (17) of which rest against a web (18) which is arranged on each of the housing halves (10) in a manner such that it extends transversely with respect to the partitions (14).

8. Break contact block according to claim 6, characterised in that in order to centre the spring (15), which is constructed as a wire torsion spring, the web (18) has a rib (20) which separates the leg ends (17).

9. Break contact block according to one of the preceding claims, characterised in that for the purpose of substantially central support on the springs (15), the contact pieces (4) have a rear surface (6) which curves outwards.

10. Break contact block according to one of the preceding claims, characterised in that the partitions (14) have aligning recesses (30) for receiving a spacing piece (31), which has a rounded extension (32) for placing against an end face (42) of a conductor rail (8) and holds the contact pieces (4) at a distance which is suitable for insertion of the conductor rails (8, 9).

11. Break contact block according to claim 6, characterised in that the abutment(s) (43) is/are part of an insulating housing (34) which receives the break contact block (1, 1') and into which projects a conductor rail (8), which is fastened by means of holding elements (36) which seal the insulating housing (34).

## Revendications

1. Bloc de contacts de séparation (1, 1') pour relier ou séparer des barres conductrices (8, 9) mobiles l'une par rapport à l'autre, constitué d'un boîtier et de pièces de contact (4) en pont disposées dans le boîtier parallèlement l'une à l'autre et montées mobiles l'une par rapport à l'autre, qui possèdent à leurs extrémités des faces de contact (5) à appliquer aux barres conductrices (6, 9, 35, 57) à relier et qui sont précontraintes sur les barres conductrices (8, 9) par des ressorts (15), deux pièces de contact (4) étant chaque fois disposées en vis-à-vis afin de former des voies de courant parallèles,
**caractérisé** en ce que le boîtier est constitué de deux moitiés de boîtier (10), qui possèdent des parties de base (11, 12) destinées à l'application mutuelle et munies d'ouvertures débouchantes (22) pour des éléments de liaison (13, 13'), et en ce que les moitiés de boîtier (10) sont munies de cloisons intermédiaires (14) pour subdiviser l'espace prévu pour recevoir les pièces de contact (4).

2. Bloc de contacts de séparation selon la revendication 1, **caractérisé** en ce que les parties de base (11, 12) présentent une face de base (23) et au moins une partie en saillie (24, 25) faisant saillie de la face de base (23) et pourvue d'une face frontale (26, 27), les parties en saillie (24, 25) étant disposées en décalage mutuel de telle sorte que, lors de l'assemblage de deux moitiés de boîtier (10) en la première position, la partie en saillie respective (24) d'une partie de base (11) s'applique par sa face frontale (26) à la face de base (23) de la partie de base opposée (12), définissant ainsi un écartement relativement petit (S1) des deux moitiés de boîtier (10), tandis que, lors de l'assemblage de deux moitiés de boîtier (10) en une position tournée de 180°, les saillies (24, 25) de parties de base (11, 12) mutuellement opposées reposent l'une sur l'autre par leurs faces frontales (26, 27), définissant ainsi un écartement relativement grand (S2) des deux moitiés de boîtier (10).

3. Bloc de contacts de séparation selon la revendication 2, **caractérisé** en ce que les saillies (24, 25) prévues sur chaque partie de base (11, 12) sont disposées symétriquement par rapport à l'ouverture débouchante (22) pour l'élément de liaison associé (13, 13').

4. Bloc de contacts de séparation selon la revendication 3, **caractérisé** en ce que chacune des deux parties de base (11, 12) présente quatre parties en saillie (24, 25) de section transversale totale sensiblement identique qui, du fait de leur disposition décalée, peuvent être assemblées en un contour fermé afin de produire l'écartement relativement petit (S1) des moitiés de boîtier (10).

5. Bloc de contacts de séparation selon l'une des revendications précédentes, **caractérisé** en ce que chaque moitié de boîtier (10) possède deux parties de base (11, 12) en porte-à-faux munies de nervures (21)

6. Bloc de contacts de séparation selon la revendication 5, **caractérisé** en ce que les nervures (21) forment chacune une face de soutien (44) pour l'application d'un élément de butée (43).

7. Bloc de contacts de séparation selon l'une des revendications précédentes, **caractérisé** en ce qu'un ressort (15) est associé à chaque pièce de contact (4) et en ce que ce ressort est réalisé sous forme de ressort de flexion à fil métallique, dont les extrémités de branches repliées (17) s'appliquent à une barrette (18) qui est disposée sur chaque moitié de boîtier (10) en s'étendant transversalement aux cloisons intermédiaires (14).

8. Bloc de contacts de séparation selon la revendication 6, **caractérisé** en ce que la barrette (18) possède, pour le centrage du ressort (15) réalisé sous forme de ressort de flexion à fil métallique, une nervure (20) séparant les extrémités de branches (17).

9. Bloc de contacts de séparation selon l'une des revendications précédentes, **caractérisé** en ce que les pièces de contact (4) possèdent une face arrière (6) cintrée vers l'extérieur, pour leur appui approximativement médian contre les ressorts (15).

10. Bloc de contacts de séparation selon l'une des revendications précédentes, **caractérisé** en ce que les cloisons intermédiaires (14) possèdent des évidements alignés (30) pour recevoir une entretoise (31), qui présente un prolongement arrondi (32) pour l'application à une face frontale (42) d'une barre conductrice (8) et qui maintient les pièces de contact (4) à un écartement approprié pour l'introduction des barres conductrices (8, 9).

11. Bloc de contacts de séparation selon la revendication 6, **caractérisé** en ce que le ou les éléments de butée (43) font partie d'un boîtier en matériau isolant (34) recevant le bloc de contacts de séparation (1, 1'), boîtier dans lequel s'enfonce une barre conductrice (8) qui est fixée au moyen d'organes de retenue (36) fermant le boîtier en matériau isolant (34).
